# EUROPEAN PATENT APPLICATION

(11) **EP 2 182 369 A1**
(43) Date of publication of application: **05.05.2010**
(21) Application number: 08791468.5
(22) Date of filing: 23.07.2008
(51) Int. Cl.: G01N 35/02, G01N 35/04, G01N 35/10

(54) **AUTOMATIC ANALYZING DEVICE AND DISPENSING METHOD**

(30) Priority: 23.07.2007 JP 2007191305
(71) Applicant: Beckman Coulter, Inc., Brea, CA 92821 (US)
(72) Inventor: MISU, Takahiro, Sunto-gun, Shizuoka 4110931 (JP)
(74) Representative: Müller-Boré & Partner Patentanwälte
(86) International application number: PCT/JP2008/063211
(87) International publication number: WO 2009/014149

(57) **Abstract**

An automatic analyzer that stirs a plurality of different liquids to induce a reaction and measures the optical characteristics of a reaction liquid, thereby analyzing the reaction liquid, and a dispensing method. The automatic analyzer includes a vibrator (12b) arranged on a specimen vessel (10) that contains a specimen including a sedimented component or a rack (9) on which the specimen vessel is arranged and a specimen stirring unit (12) that is arranged on a transfer path for transferring the rack to a dispensing position and includes an electrode to feed electric power to the vibrator, and the specimen stirring unit (12) feeds the electric power to the vibrator from the electrode while the rack (9) is transferred to the dispensing position along the transfer path and stirs the specimen that includes the sedimented component contained in the vessel.

## Description

### TECHNICAL FIELD

The present invention relates to an automatic analyzer and a dispensing method.

### BACKGROUND ART

Conventionally, when dispensing a specimen, such as blood (whole blood) for analyzing hemoglobin Alc (HbAlc), which is a component of red blood cells, a dispensing device of an automatic analyzer used for dispensing a specimen or a reagent detects the liquid level of the blood contained in a specimen vessel and dispenses the blood with the tip end of a dispensing probe inserted to a depth in consideration of the settling of the red blood cells. The blood (whole blood) is one example of such specimen, in which a concentration gradient occurs in a vertical direction due to the settling of a component in accordance with the passage of time after the specimen is collected (For example, see Patent Document 1).

Patent document 1: Japanese Laid-open Patent Publication No. 2000-121650

### DISCLOSURE OF INVENTION

### PROBLEM TO BE SOLVED BY THE INVENTION

Because the tip end of the dispensing probe is inserted into the specimen in consideration of the settling of a component, the area to be cleaned is larger compared to the case where the tip end of the dispensing probe is inserted into a liquid sample to a constant level. Therefore, the dispensing device has a problem in that the amount of cleaning liquid for cleaning the probe and the time required for cleaning are increased.

The present invention has been made in view of the above, and it is an object of the present invention to provide an automatic analyzer and a dispensing method that can always dispense a specimen with a certain concentration simply by inserting the tip end of a dispensing probe into the specimen to a certain level in the same manner as for a usual liquid sample even if the specimen includes a sedimented component.

### MEANS FOR SOLVING PROBLEM

To solve the problem described above and achieve the object, an automatic analyzer according to the present invention stirs a plurality of different liquids to induce a reaction and measures an optical characteristic of a reaction liquid to analyze the reaction liquid, and includes a stirring unit that includes a vibrator that is arranged on a vessel that contains a specimen including a sedimented component or a rack on which the vessel is arranged; and an electrode that is arranged on a transfer path for transferring the rack to a dispensing position and feeds electric power to the vibrator, wherein the stirring unit feeds the electric power from the electrode to the vibrator while the rack is being transferred to the dispensing position along the transfer path and stirs the specimen including the sedimented component contained in the vessel.

In the automatic analyzer according to the present invention as set forth in the invention described above, the specimen is stirred during a time from when the rack is installed on the transfer path to when the specimen is dispensed at the dispensing position.

To solve the problem described above and achieve the object, a dispensing method according to the present invention for dispensing a specimen that includes a sedimented component includes a stirring step for stirring the specimen that includes the sedimented component before dispensing.

To solve the problem described above and achieve the object, the dispensing method according to the present invention further includes a dispensing step for dispensing a clear supernatant fluid of the specimen before the stirring step.

### EFFECT OF THE INVENTION

The automatic analyzer of the present invention feeds electric power to the vibrator from the electrode of the stirring unit while the rack is transferred to the dispensing position along the transfer path and stirs the specimen that includes the sedimented component contained in the vessel. The dispensing method of the present invention includes the stirring step for stirring the specimen that includes the sedimented component before dispensing. Therefore, an advantage is produced such that, even if the specimen includes the sedimented component, it is possible to always dispense the specimen with a certain concentration simply by always inserting the tip end of the dispensing probe into the specimen to a certain level in the same manner as for a usual liquid sample.

### BRIEF DESCRIPTION OF DRAWINGS

FIG. 1 is a schematic configuration diagram that illustrates an automatic analyzer of the present invention.
FIG. 2 is a block diagram that illustrates the configuration of the automatic analyzer.
FIG. 3 is a plain view that illustrates the arrangement of a specimen stirring unit by enlarging a specimen-vessel transferring device of the automatic analyzer.
FIG. 4 is a perspective view that illustrates the arrangement of feed electrodes arranged along a transfer path of the specimen-vessel transferring device and receive electrodes arranged on a rack.
FIG. 5 is a cross-sectional view, which is sectioned in a width direction, of the rack that holds a specimen vessel.
FIG. 6 is a flowchart that illustrates a dispensing method of the present invention.
FIG. 7 is a plain view that explains the arrangement of the specimen stirring unit and corresponds to FIG. 3.
FIG. 8 is a perspective view that explains the configuration of a fixed stirring unit of the specimen stirring unit and corresponds to FIG. 4.
FIG. 9 is a perspective view that illustrates an example where a plurality of feed electrodes is arranged on the transfer path illustrated in FIG. 4.
FIG. 10 is a plain view that explains a different arrangement of the specimen stirring unit and corresponds to FIG. 3.
FIG. 11 is an enlarged plain view that explains the configuration of a movable stirring unit of the specimen stirring unit.
FIG. 12 is a cross-sectional view, which is sectioned in a width direction, of a rack that includes a fixed specimen stirring unit and holds the specimen vessel.
FIG. 13 is a cross-sectional view, which is sectioned in a longitudinal direction, of a rack that includes a fixed specimen stirring unit and holds a specimen vessel.
FIG. 14 illustrates a modified example 1 of the specimen stirring unit and is a cross-sectional view, which is sectioned in a width direction, of a rack that holds the specimen vessel.
FIG. 15 illustrates the modified example 1 of the specimen stirring unit and is a cross-sectional view, which is sectioned in a longitudinal direction, of a rack that holds the specimen vessel.
FIG. 16 illustrates a further modification of the modified example 1 and is a cross-sectional view, which is sectioned in a width direction, of a rack that holds the specimen vessel.
FIG. 17 illustrates a modified example 2 of the specimen stirring unit and is a cross-sectional view, which is sectioned in a width direction, of a rack that holds the specimen vessel.
FIG. 18 illustrates the modified example 2 of the specimen stirring unit and is a cross-sectional view, which is sectioned in a longitudinal direction, of a rack that holds the specimen vessel.
FIG. 19 illustrates a further modification of the modified example 2 and is a cross-sectional view, which is sectioned in a width direction, of a rack that holds the specimen vessel.

### EXPLANATIONS OF LETTERS OR NUMERALS

- 1: Automatic analyzer

- 2, 3: Reagent table
- 4: Reaction table
- 5: Reaction vessel
- 6, 7: Reagent dispensing device
- 8: Specimen-vessel transferring device
- 8b: Longitudinal transfer path
- 8a: Transverse transfer path
- 9: Rack
- 10: Specimen vessel
- 11: Specimen dispensing device
- 11a: Drive arm
- 11b: Probe
- 12: Specimen stirring unit
- 12a: Feed electrode
- 12b: Vibrator
- 13: Analysis optical system
- 14: Cleaning device
- 15: Stirrer
- 16: Linear guide
- 17: Control unit
- 18: Input unit
- 19: Display unit
- Ps: Set position
- Pp: Dispensing position

### BEST MODE(S) FOR CARRYING OUT THE INVENTION

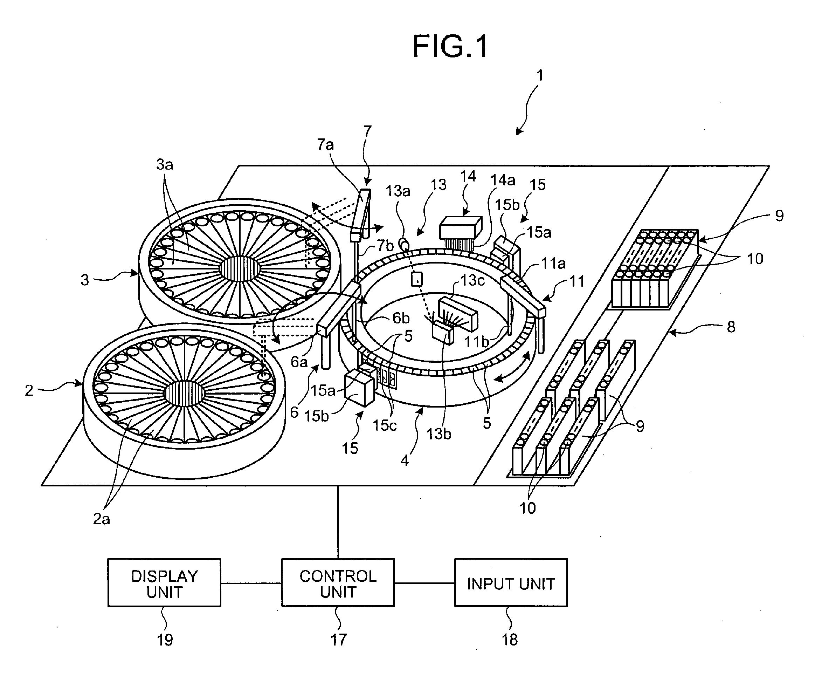

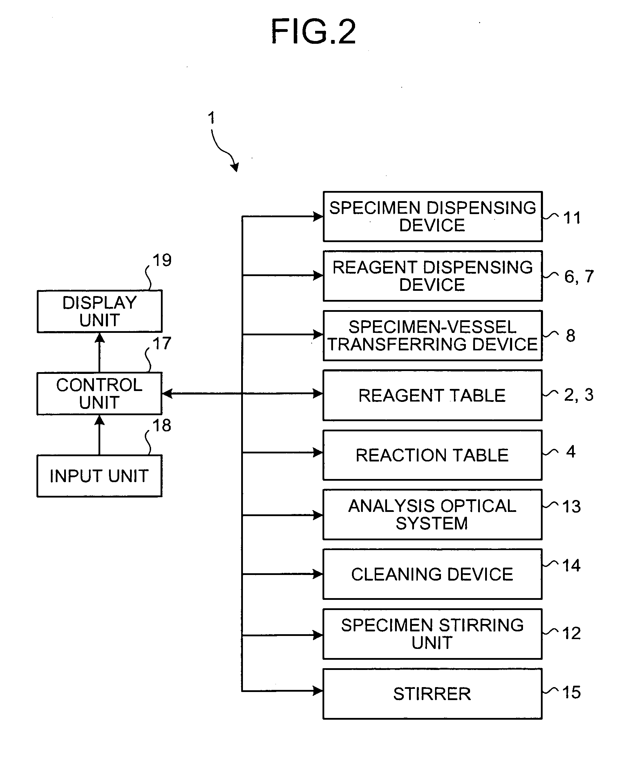

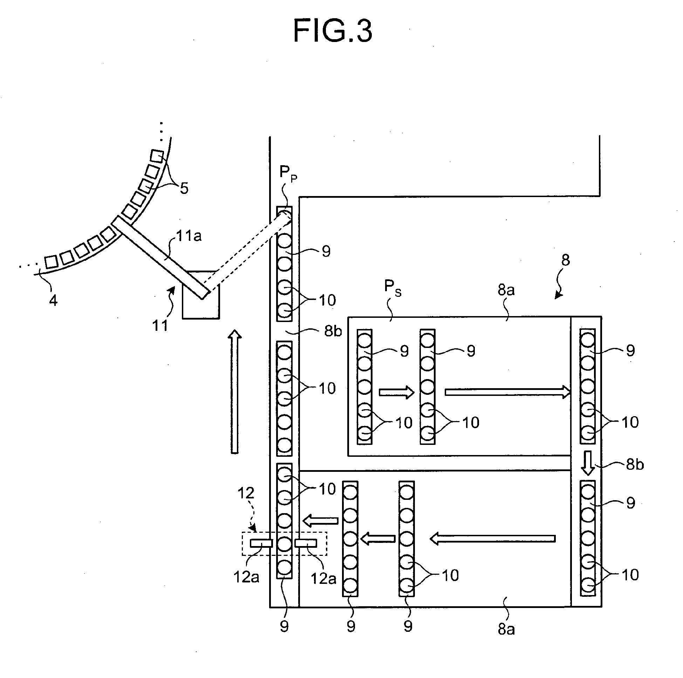

A detailed explanation will be given of an embodiment of an automatic analyzer and a dispensing method of the present invention with reference to the drawings. FIG. 1 is a schematic configuration diagram that illustrates an automatic analyzer of the present invention. FIG. 2 is a block diagram that illustrates the configuration of the automatic analyzer. FIG. 3 is a plain view that illustrates the arrangement of a specimen stirring unit by enlarging a specimen-vessel transferring device of the automatic analyzer.

As illustrated in FIGS. 1 and 2, an automatic analyzer 1 includes reagent tables 2, 3, a reaction table 4, a specimen-vessel transferring device 8, a specimen dispensing device 11, a specimen stirring unit 12 (see FIG. 3), an analysis optical system 13, a cleaning device 14, a stirrer 15, and a control unit 17.

As illustrated in FIG. 1, the reagent tables 2, 3 hold a plurality of reagent vessels 2a, 3a, respectively, arranged in a circumferential direction and are rotated by a driving means so as to transfer the reagent vessels 2a, 3a in the circumferential direction.

As illustrated in FIG. 1, the reaction table 4 has a plurality of reaction vessels 5 arranged in a circumferential direction and is rotated clockwise or counterclockwise by a driving means different from the driving means of the reagent tables 2, 3 so as to transfer the reaction vessels 5. The reaction table 4 rotates (one revolution subtracted by one reaction vessel)/4 for one cycle in a clockwise direction and rotates (one revolution subtracted by one reaction vessel) for four cycles, for example.

The reaction vessel 5 is a vessel whose capacity is very small, from several nL to several hundred µL, and a transparent material is used through which more than 80% of light contained in the analysis light emitted by a light emitting unit 13a of the analysis optical system 13 is transmitted. For example, glass that includes heat-resistant glass or synthetic resin such as cyclic olefin or polystyrene may be used. The reaction vessel 5 is a square cylindrical cuvette with a square horizontal cross sectional area, in which a liquid is retained, and an opening at the top. Reagents are dispensed into the reaction vessels 5 from the reagent vessels 2a, 3a of the reagent tables 2, 3 by reagent dispensing devices 6, 7 arranged near the reaction table 4.

The reagent dispensing devices 6, 7 have probes 6b, 7b, respectively, which dispense reagents, attached to arms 6a, 7a that are rotated in a horizontal plane in the directions indicated by arrows and include a cleaning means that cleans the probes 6b, 7b by using cleaning water.

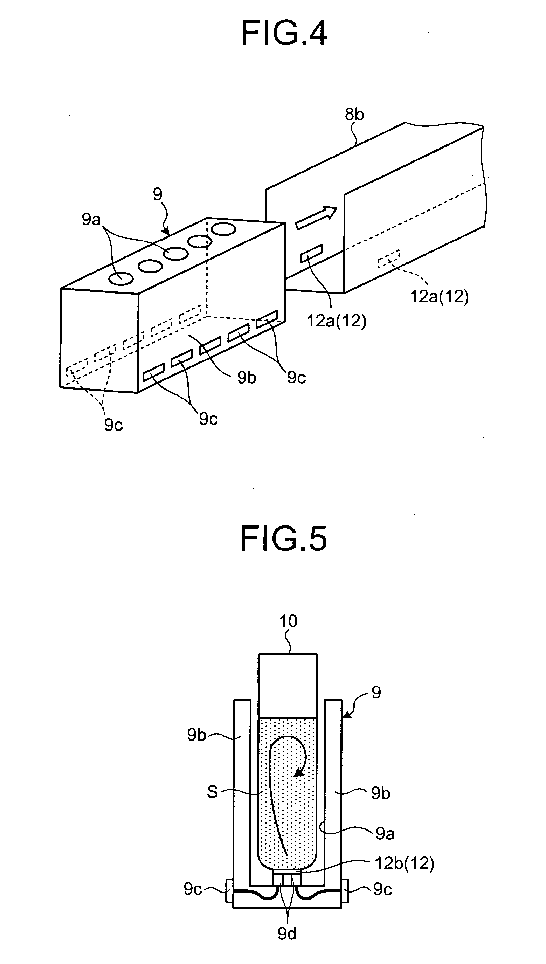

As illustrated in FIG. 3, the specimen-vessel transferring device 8 is a transferring means, such as a belt conveyor, that transfers a plurality of arranged racks 9 one by one in the direction indicated by the arrow or in the opposite direction. The specimen-vessel transferring device 8 includes a transverse transfer path 8a for transferring the racks 9 in a transverse direction and a longitudinal transfer path 8b for transferring the racks 9 in a longitudinal direction. The specimen-vessel transferring device 8 transfers the racks 9 fed to a set position Ps (see FIG. 3) of the transverse transfer path 8a by moving them step by step in the directions indicated by the arrows along the transverse transfer path 8a and the longitudinal transfer path 8b. The rack 9 holds a plurality of specimen vessels 10 that contain specimens in a recessed portion 9a (see FIG. 5). A plurality of receive electrodes 9c is arranged on a lower portion of a side wall 9b in a longitudinal direction.

Each time the step-moving of the racks 9 transferred by the specimen-vessel transferring device 8 is stopped, the specimen dispensing device 11 dispenses a specimen into the reaction vessel 5 from each of the specimen vessels 10 located at a dispensing position Pp on the transfer path of the specimen-vessel transferring device 8. The specimen dispensing device 11 includes a drive arm 11a and a probe 11b that are rotated in a horizontal direction and a liquid-level detecting means as well as a cleaning means (not illustrated) that cleans the probe 11b using cleaning water.

The specimen stirring unit 12 is a stirring means that stirs a specimen that includes a sedimented component. As illustrate in FIG. 3, the specimen stirring unit 12 is arranged along the one longitudinal transfer path 8b of the specimen-vessel transferring device 8 that transfers the racks 9 from the set position Ps of the racks 9 to the dispensing position Pp by step-moving them in a longitudinal direction. The specimen stirring unit 12 includes a feed electrode 12a and a vibrator 12b (see FIG. 5) arranged at the bottom of the specimen vessel 10.

As illustrated in FIG. 4, the feed electrodes 12a are arranged on both sides of the longitudinal transfer path 8b of the specimen-vessel transferring device 8. The vibrator 12b is driven by receiving drive electric power fed due to the contact between the receive electrode 9c and the feed electrode 12a via a feed electrode 9d arranged at the bottom of the recessed portion 9a of the rack 9, as illustrated in FIG. 5, thereby stirring a specimen S that contains a sedimented component in the specimen vessel 10 without making contact. Two feed electrodes 12a may be arranged on one side of the longitudinal transfer path 8b instead of both sides thereof.

For example, a surface acoustic wave element with a plurality of comb-teeth electrodes (IDT) formed on one surface of a piezoelectric substrate made of lithium niobate (LiNbO3), or the like, is used for the vibrator 12b, and the vibrator 12b stirs a liquid contained in the specimen vessel 10 by using a surface acoustic wave or bulk wave. The vibrator 12b is arranged at the bottom that becomes a horizontal flat surface via a curved area of the lower portion of the specimen vessel 10. In the cross-sectional views of the rack 9 used in the following drawings including FIG. 5, hatching is omitted to place priority on viewability of the drawings.

The analysis optical system 13 emits analysis light to analyze the liquid contained in the reaction vessel 5 where the reagent and the specimen are reacted. The analysis optical system 13 includes, as illustrated in FIG. 1, the light emitting unit 13a, a light splitting unit 13b, and a light receiving unit 13c. The analysis light emitted by the light emitting unit 13a is transmitted through the liquid contained in the reaction vessel 5 and is received by the light receiving unit 13c located at a position opposed to the light splitting unit 13b. The light receiving unit 13c is connected to the control unit 17 and outputs a light intensity signal of the received analysis light to the control unit 17.

After sucking up and discharging the liquid contained in the reaction vessel 5 by using a nozzle 14a, the cleaning device 14 repeats an operation of injecting and sucking up a cleaning liquid, such as detergent or cleaning water, via the nozzle 14a a plurality of times, thereby cleaning the inside of the reaction vessel 5 for which the optical measurement is finished by the analysis optical system 13.

A microcomputer or the like is used for the control unit 17, for example. As illustrated in FIGS. 1 and 2, the control unit 17 is connected to each component of the automatic analyzer 1 so as to control the operation of each component and analyzes constituent concentrations, and the like, of a specimen on the basis of the absorbance of the liquid contained in the reaction vessel 5 in accordance with the intensity of light output from the light emitting unit 13a and the intensity of light received by the light receiving unit 13c. Furthermore, the control unit 17 determines the position of the specimen vessel 10, for which the stirring is required, along the transfer path of the specimen-vessel transferring device 8 by using information about the specimen vessel 10, for which the stirring is required, input from a host computer and position information of the rack 9 input from the specimen-vessel transferring device 8. The control unit 17 controls the specimen stirring unit 12 to feed drive electric power to the feed electrode 12a that corresponds to the specimen vessel 10 for which the stirring is required.

The control unit 17 causes an analysis operation to be performed while controlling the operation of each component of the automatic analyzer 1 in accordance with an analysis instruction input from an input unit 18, such as a keyboard, and displays various types of information, and the like, in accordance with a display instruction input from the input unit 18 in addition to an analysis result or warning information on a display unit 19, such as a display panel. Besides this, the control unit 17 detects abnormalities that include a contact failure of the vibrator 12b, or the like, on the basis of the reflection of the drive electric power from the vibrator 12b arranged at the bottom of the specimen vessel 10 and stores therein the number of times an abnormality is detected. The control unit 17 changes the settings of the dispensing operation relating to the specimen dispensing device 11 and the cleaning operation of the probe 11b when a conventional dispensing method for dispensing a usual specimen by deeply inserting the probe 11b into the specimen and a dispensing method of the present invention for stirring a specimen that contains a sedimented component before dispensing and inserting the probe 11b into a specimen to a shallow depth are used.

The stirrer 15 stirs the liquid contained in the reaction vessel 5 by using ultrasound that is sound generated by driving a surface acoustic wave element 15c attached to the reaction vessel 5 and has a frequency that exceeds an audible frequency. The stirrer 15 includes an electric-power transmitting member 15a that transmits electric power fed from a high-frequency alternating-current source of about several MHz to several hundred MHz to the surface acoustic wave element 15c and an arrangement determining member 15b that adjusts the relative arrangement of the electric-power transmitting member 15a and an electric terminal in the circumferential direction and the radial direction of the reaction table 4.

The automatic analyzer 1 that has the above-described configuration is operated under the control of the control unit 17. The reagent dispensing devices 6, 7 sequentially dispense reagents from the reagent vessels 2a, 3a into the plurality of reaction vessels 5 transferred by the rotating reaction table 4 in a circumferential direction. Specimens are sequentially dispensed by the specimen dispensing device 11 into the reaction vessels 5, into which the reagents have been dispensed, from the plurality of specimen vessels 10 held by the rack 9.

Each time the reaction table 4 is stopped, the reaction vessel 5 in which the reagent and the specimen have been dispensed is sequentially stirred by the stirrer 15, whereby the reagent and the specimen are reacted, and when the reaction table 4 is rotated again, the reaction vessel 5 passes by the analysis optical system 13. At that time, the optical measurement is performed on the reaction liquid contained in the reaction vessel 5 by the light receiving unit 13c, and the constituent concentration, or the like, is analyzed by the control unit 17. The reaction vessel 5, for which the optical measurement of the reaction liquid is finished, is cleaned by the cleaning device 14 and then is used for analysis of a specimen again.

The automatic analyzer 1 includes the specimen stirring unit 12 arranged on the transfer path of the specimen-vessel transferring device 8. The plurality of specimen vessels 10 held by the rack 9 transferred along the transfer path of the specimen-vessel transferring device 8 has the receive electrodes 9c arranged on the lower portion of the side wall 9b sequentially brought into contact with the feed electrodes 12a in accordance with the step-moving of the rack 9. As a result, when the specimen vessel 10 that contains a specimen including a sedimented component reaches the specimen stirring unit 12, the vibrator 12b receives the drive electric power sent under the control of the control unit 17 via the feed electrode 9d, and the specimen that includes the sedimented component is uniformly stirred by the sound flow caused by the ultrasound generated by the vibrator 12b due to the drive electric power.

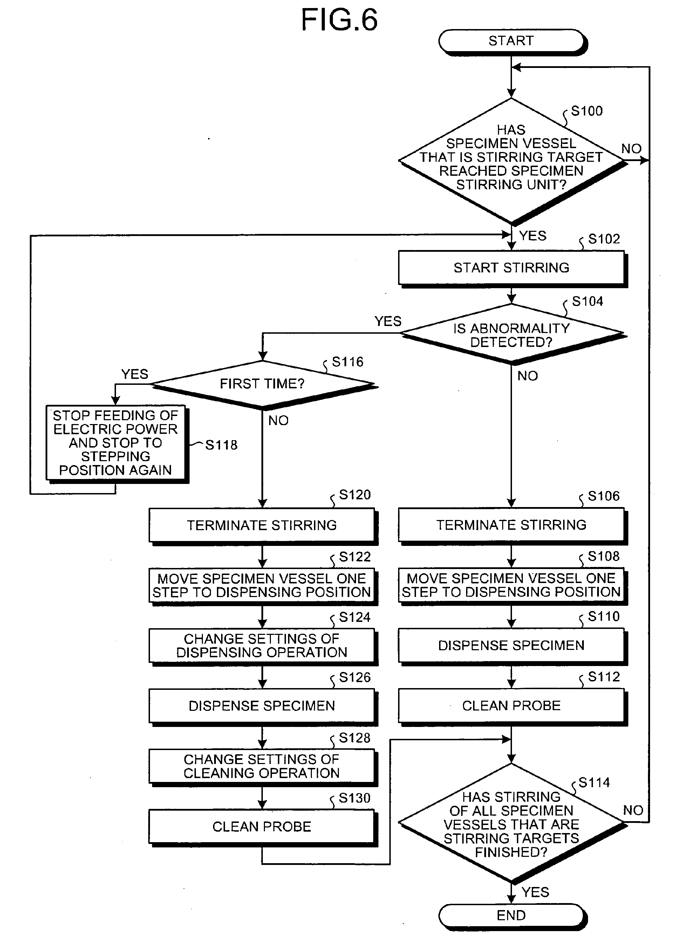

An explanation will be given below of a specimen dispensing method performed under the control of the control unit 17 with reference to the flowchart illustrated in FIG. 6.

First, the control unit 17 determines whether the specimen vessel 10 that contains the specimen including the sedimented component and for which the stirring is required has reaches the specimen stirring unit 12 (step S100). The position of the specimen vessel 10 is detected on the basis of information, which is input from the host computer to the control unit 17, about the specimen vessel 10 that contains the specimen including the sedimented component as the stepping position of the specimen vessel 10 along the transfer path of the specimen-vessel transferring device 8, and it is determined whether the detected stepping position of the specimen vessel 10 is the position of the specimen stirring unit 12.

If the detected stepping position of the specimen vessel 10 is not the position of the specimen stirring unit 12 (step S100, No), the control unit 17 goes back to step S100 and determines whether the specimen vessel 10 has reached the specimen stirring unit 12. Conversely, if the detected stepping position of the specimen vessel 10 is the position of the specimen stirring unit 12 (step S100, Yes), the control unit 17 starts to stir the specimen that includes the sedimented component contained in the specimen vessel 10 (step S102). At that time, the stirring is performed such that, after it is detected that the specimen vessel 10 has reached the specimen stirring unit 12 and after the step-moving by the specimen-vessel transferring device 8 has stopped, the control unit 17 controls an electric-power feed unit to feed drive electric power to the feed electrode 12a that corresponds to the specimen vessel 10 for which the stirring is required.

Next, the control unit 17 determines whether an abnormality is detected after the stirring has started (step S104). If an abnormality, such as a contact failure between the receive electrode 9c and the feed electrode 12a, is not detected after the stirring has started (step S104, No), the specimen that includes the sedimented component contained in the specimen vessel 10 is uniformly stirred by the specimen stirring unit 12. Therefore, the control unit 17 stops the drive electric power from being fed to the feed electrode 12a and terminates the stirring of the specimen (step S106).

Afterward, the control unit 17 causes the specimen vessel 10 in which the specimen has been uniformly stirred to move step by step to the dispensing position (step S108). Then, the control unit 17 causes the specimen dispensing device 11 to dispense the uniformly stirred specimen into the reaction vessel 5 from the specimen vessel 10 (step S110). At that time, because the specimen has been uniformly stirred in advance, the specimen dispensing device 11 can always dispense the specimen at a constant concentration simply by inserting the lower end of the probe 11b into the specimen to a certain level.

Next, the control unit 17 causes the cleaning means to clean the probe 11b of the specimen dispensing device 11 (step S112). At that time, because the lower end of the probe 11b is only slightly inserted into the specimen, a small amount of cleaning water is required to be used by the cleaning means for cleaning. Then, the control unit 17 determines whether the stirring of all of the specimen vessels 10 for which the stirring is required has finished on the basis of information, which is input from the host computer to the control unit 17, about the specimen vessels 10 that contain specimens including sedimented components (step S114).

If the stirring of all of the specimen vessels 10 has not finished (step S114, No), the control unit 17 goes back to step S100. If the stirring of all of the specimen vessels 10 has finished (step S114, Yes), the control unit 17 terminates the method of dispensing the specimens from the specimen vessels 10 that contain the specimens including the sedimented components.

Conversely, if an abnormality, such as a contact failure between the receive electrode 9c and the feed electrode 12a, is detected after the stirring has started (step S104, Yes), the control unit 17 determines whether the abnormality is detected for the first time (step S116). If the number of times the abnormality is detected is the first time (step S116, Yes), the control unit 17 executes to stop the feeding of the drive electric power to the feed electrode 12a and stop the specimen vessel 10 again to the stepping position by the specimen-vessel transferring device 8 (step S118). Afterward, the control unit 17 goes back to step S102 and resumes the stirring. At that time, the control unit 17 notifies the host computer of an indication that the abnormality, such as a contact failure, is detected.

The contact failure between the feed electrode 9d and the vibrator 12b can be resolved by reinstalling the specimen vessel 10 in the recessed portion 9a. Furthermore, the detected abnormality can be, other than the contact failure between the receive electrode 9c and the feed electrode 12a, for example, a failure of the vibrator 12b, and in this case, the specimen vessel 10 is replaced. As explained in a modified example 1, if the vibrator 12b is arranged on the side of the rack 9, the position of the recessed portion 9a where the specimen vessel 10 that is a stirring target is arranged is changed.

Conversely, if the number of times the abnormality is detected is not the first time (step S116, No), the control unit 17 stops the drive electric power from being fed to the feed electrode 12a and terminates the stirring of the specimen (step S120). Afterward, the control unit 17 causes the specimen vessel 10 to move step by step to the dispensing position (step S122). The control unit 17 then changes the settings of the dispensing operation of the specimen dispensing device 11 (step S124).

Next, the control unit 17 causes the specimen dispensing device 11 to dispense the specimen from the specimen vessel 10 into the reaction vessel 5 (step S126). At that time, the specimen dispensing device 11, under the control of the control unit 17, dispenses the specimen with the probe 11b deeply inserted into the specimen in the specimen vessel 10 in the same manner as the case where the specimen is dispensed in a state where the sedimented component in the specimen contained in the specimen vessel 10 has settled.

Subsequently, the control unit 17 changes the settings of the cleaning operation of the probe 11b (step S128). The control unit 17 then cleans the probe 11b, by which the specimen has been dispensed, in accordance with the changed cleaning operation (step S130). At that time, the cleaning means, which cleans the probe 11b, sufficiently cleans a part of the probe 11b deeply inserted into the specimen in the same manner as in the case of cleaning the probe 11b that has dispensed a specimen in a state where the sedimented component in the specimen contained in the specimen vessel 10 has settled. Afterward, the control unit 17 skips to step S114 and performs the steps after step S114.

As is clear from the above explanation, as illustrated in FIG. 3, the specimen that includes the sedimented component contained in the specimen vessel 10 is uniformly stirred by the sound flow caused by the ultrasound generated by the vibrator 12b in the specimen stirring unit 12 before being dispensed at the dispensing position Pp on the transfer path of the specimen-vessel transferring device 8. Therefore, even if the specimen includes a sedimented component, the specimen dispensing device 11 can dispense the uniformly stirred specimen into the reaction vessel 5 from the specimen vessel 10 simply by always inserting the tip end of the probe 11b into the specimen to a certain level in the same manner as for the other usual specimens. As a result, the specimen dispensing device 11 does not need to deeply insert the tip end of the probe 11b into the specimen even if the specimen includes a sedimented component, the same cleaning as in the case where a usual specimen is dispensed is only required to be performed, and the same dispensing operation and the same cleaning operation are only required to be performed always; therefore, the control of the operation becomes easier.

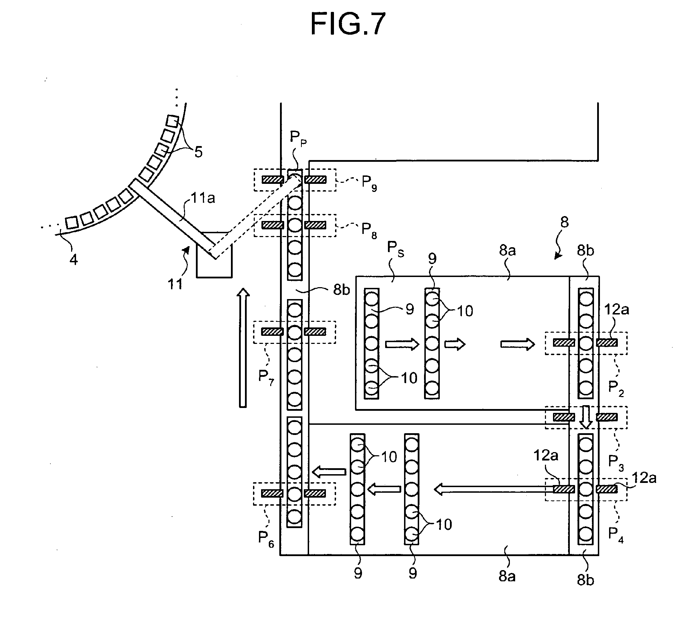

The specimen stirring unit 12 can be arranged at any position between the set position Ps and the dispensing position Pp if a time period from when the rack 9, on which the specimen vessel 10 that contains a specimen including a sedimented component is set, is arranged to when the arranged rack 9 is transferred to the dispensing position Pp by the specimen-vessel transferring device 8 does not affect an analysis result due to the settling of a sedimented component (for example, 15 to 30 minutes for whole blood components). For example, as illustrated in FIG. 7, the specimen stirring unit 12 is arranged at least at one position from a second stirring unit P2 to a ninth stirring unit P9.

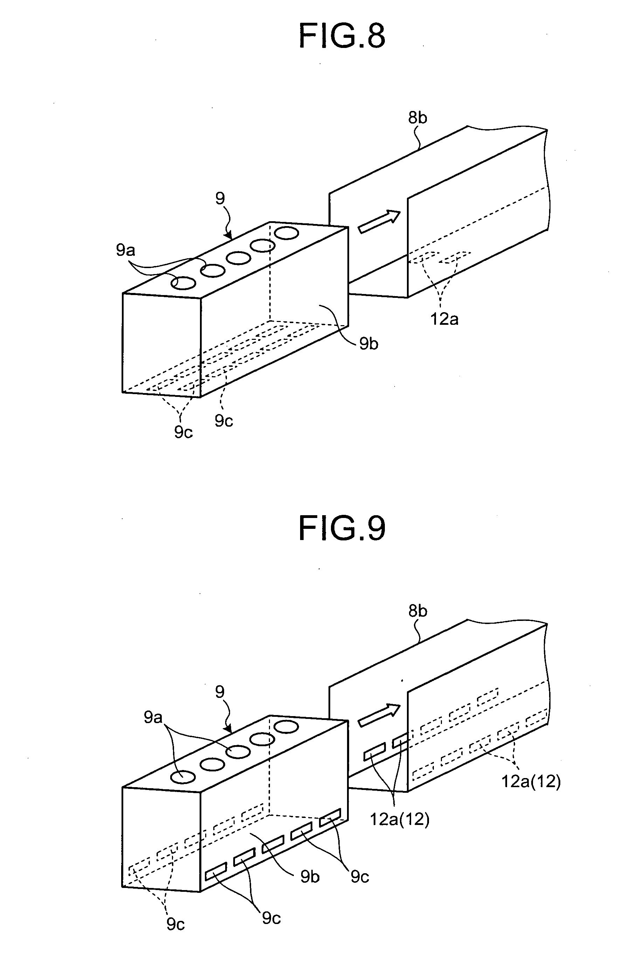

These stirring units are the same fixed stirring units as the specimen stirring unit 12 illustrated in FIG. 3 and are arranged along the longitudinal transfer path 8b of the specimen-vessel transferring device 8. For example, the second stirring unit P2 has the feed electrode 12a arranged at the bottom of the longitudinal transfer path 8b, as illustrated in FIG. 8 (FIG. 9). The rack 9 that holds the specimen vessels 10 has the plurality of receive electrodes 9c arranged at the bottom that corresponds to the feed electrode 12a. As illustrated in FIG. 9, it is possible that the plurality of feed electrodes 12a is arranged on both sides of the longitudinal transfer path 8b and the feed electrode 12a to which the electric power is fed is changed so that a specimen in the specimen vessel 10 held at a predetermined position of the rack 9 is stirred. In this case, it is possible that the plurality of feed electrodes 12a is arranged at the bottom of the longitudinal transfer path 8b. Furthermore, the vibrator 12b can be arranged on the side surface near the bottom surface if the vibrator 12b is arranged on the bottom of the specimen vessel 10.

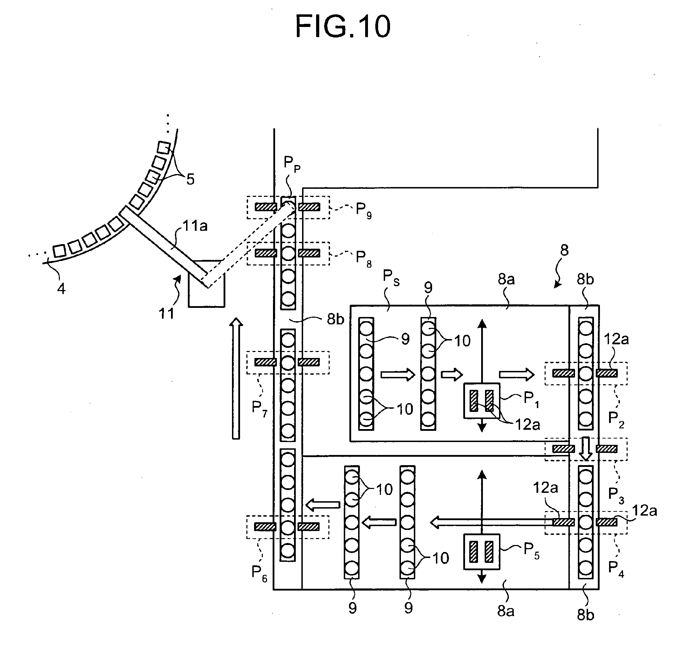

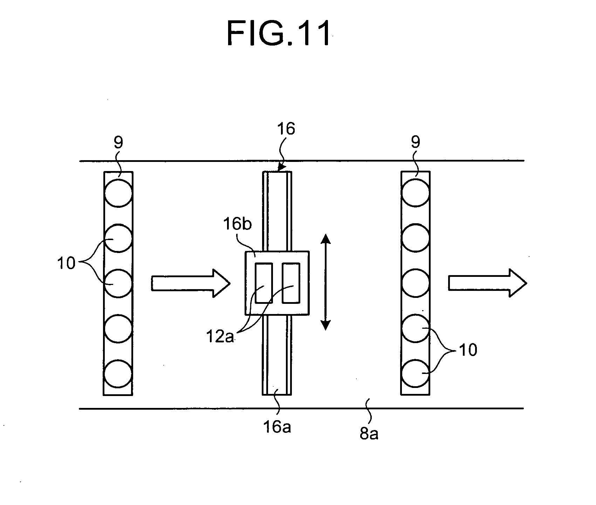

Moreover, if the stirring is also performed on the transverse transfer path 8a, as illustrated in FIG. 10, a first stirring unit P1 and a fifth stirring unit P5 are arranged on the transverse transfer path 8a. For example, the first stirring unit P1 is a movable stirring unit that is arranged on the lower portion of the transverse transfer path 8a of the specimen-vessel transferring device 8 and, as illustrated in FIG. 11, has the two feed electrodes 12a arranged on the top surface of a slider 16b that slides along a rail 16a of a linear guide 16, and the fifth stirring unit P5 is also a movable stirring unit. In this case, the rack 9 has the feed electrode 12a arranged on its bottom surface.

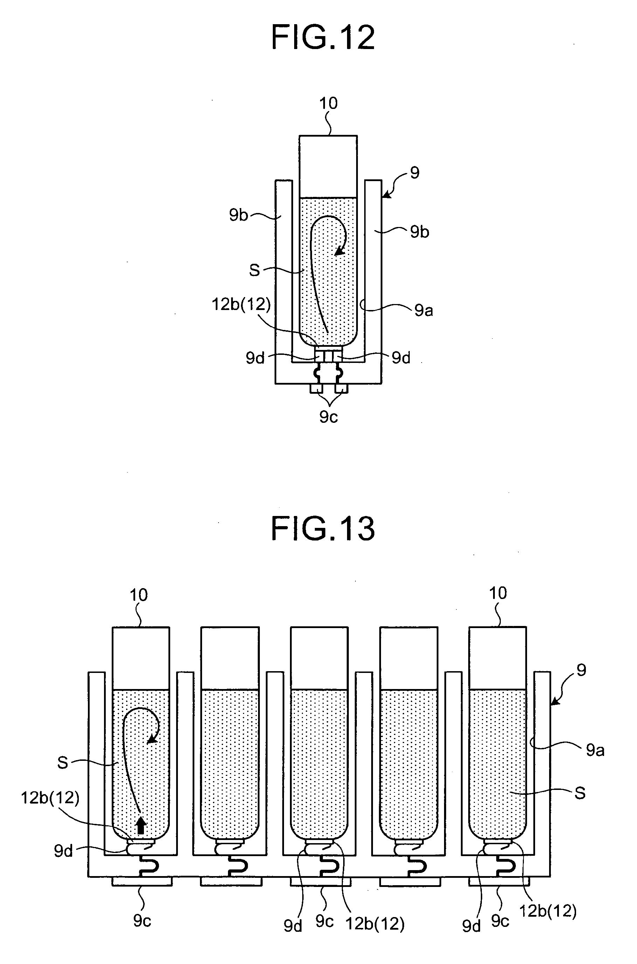

With the above-described configuration, in the rack 9 transferred by the specimen-vessel transferring device 8, as illustrated in FIGS. 12 and 13, the receive electrode 9c arranged on the bottom surface is in contact with the feed electrode 12a via the feed electrode 9d and the vibrator 12b receives the drive electric power. As a result, a specimen S that includes a sedimented component contained in the specimen vessel 10 held by the rack 9 is uniformly stirred by the sound flow caused by the ultrasound generated by the vibrator 12b without making contact.

Thus, the specimen dispensing device 11 can always dispense a specimen with a certain concentration simply by inserting the end of the probe 11b into the specimen to a certain level in the same manner as for a usual liquid sample. Furthermore, because the specimen stirring unit 12 uses the surface acoustic wave element as the vibrator 12b, it is easier to arrange it along the specimen-vessel transferring device 8 compared to arranging a mechanical stirring means such as a stirring bar. Therefore, if the feed electrode 12a of the specimen stirring unit 12 can be arranged, there is an advantage in that the specimen dispensing device 11 can be easily arranged in the automatic analyzer 1 without making major structural modifications.

The specimen dispensing device 11 may, after dispensing a plasma component of blood contained in the specimen vessel 10 in the ninth stirring unit P9, stir the blood contained in the specimen vessel 10 and dispense the uniformly mixed whole blood. In this manner, it is possible to dispense the blood contained in the specimen vessel 10 into a plurality of vessels in accordance with different examination purposes without dividing one blood into a plurality of vessels for different examination purposes in advance.

If the abnormality is detected for a second time, it is often the case that a satisfactory result cannot be obtained even if the specimen dispensed into the reaction vessel 5 is analyzed. Therefore, the steps after step S120 can be omitted. Furthermore, step S130 can be performed at the same time as step S126.

### Modified example 1

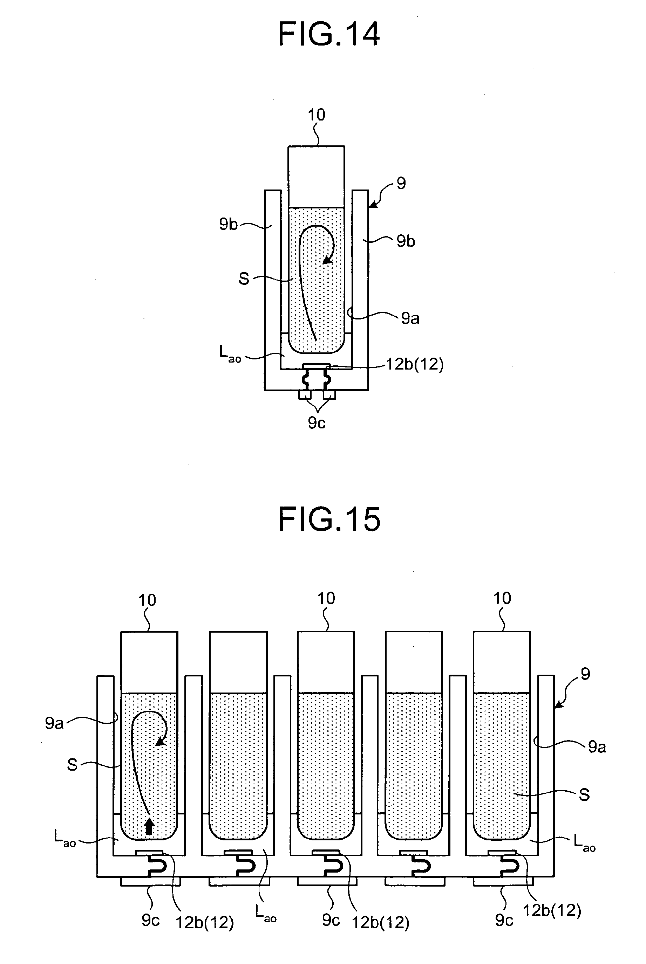

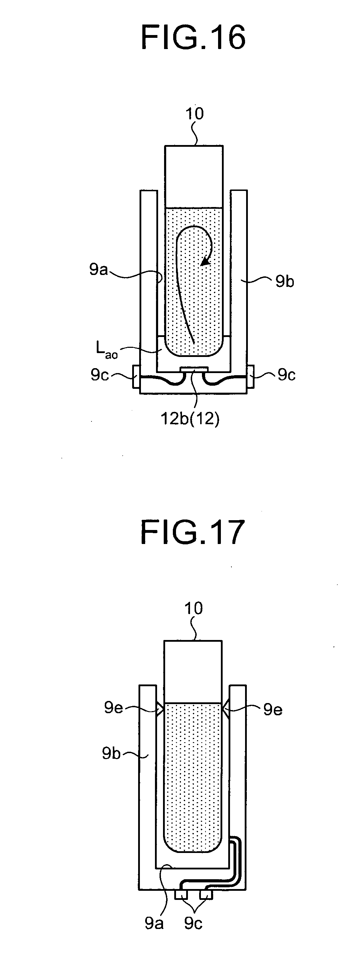

As illustrated in FIGS. 14 and 15, instead of having the vibrator 12b arranged on the specimen vessel 10, the specimen stirring unit 12 may have the vibrator 12b arranged at the bottom of the recessed portion 9a formed on the rack 9 so that the ultrasound generated by the vibrator 12b is propagated to the specimen S that includes a sedimented component contained in the specimen vessel 10 via an acoustic matching layer Lao made of oil, water, gel, or the like. As illustrated in FIG. 16, the rack 9 may have the receive electrodes 9c arranged on the lower portion of the side wall 9b so that the electric power is fed from the plurality of feed electrodes 12a arranged on both sides of the longitudinal transfer path 8b of the specimen-vessel transferring device 8 at a predetermined interval in the conveying direction of the rack 9. If the drive frequency of the vibrator 12b is low, the acoustic matching layer Lao is not necessary.

### Modified example 2

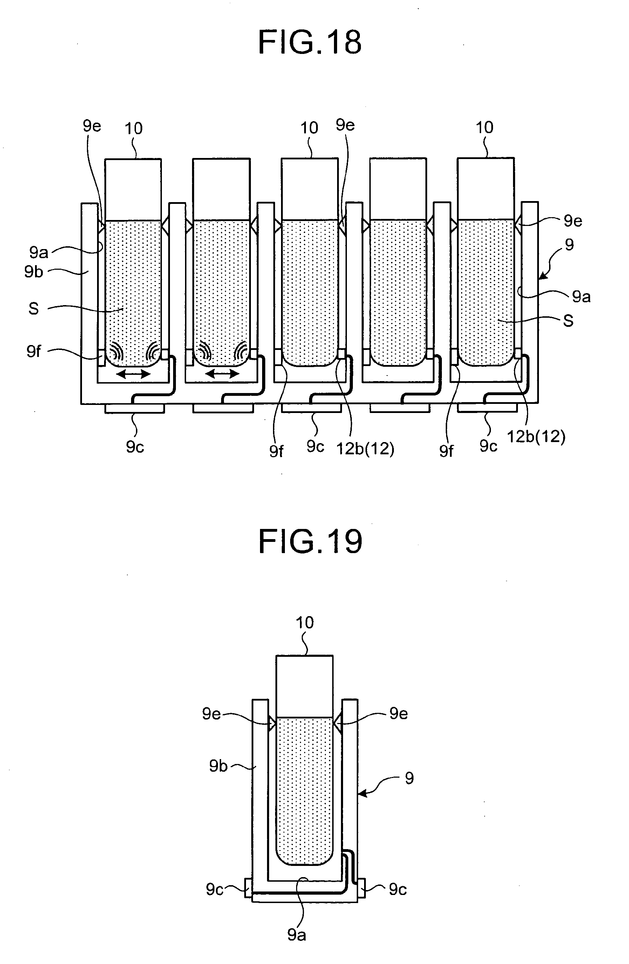

Furthermore, the specimen stirring unit 12 may use a thickness longitudinal vibrator as the vibrator 12b instead of the surface acoustic wave element. In this case, because the vibrator 12b that uses a thickness longitudinal vibrator has a large amplitude of vibration, as illustrated in FIGS. 17 and 18, protruding portions 9e that are supporting points are arranged on the upper portion of the recessed portion 9a that holds the specimen vessel 10, and an elastic member 9f that receives vibration applied by the vibrator 12b to the specimen vessel 10 is arranged at a position opposed to the vibrator 12b. With such a configuration, when the vibration is applied from the vibrator 12b to the specimen vessel 10 held in the recessed portion 9a, the lower portion of the specimen vessel 10 vibrates in a horizontal direction as indicated by the arrow in FIG. 18 with the protruding portions 9e as the supporting points, whereby the contained specimen S that includes the sedimented component can be uniformly stirred.

The specimen stirring unit 12 can use a magnetostrictive vibrator, or the like, as the vibrator 12b in addition to an electrostrictive vibrator that includes the surface acoustic wave element or the thickness longitudinal vibrator described above.

Moreover, as illustrated in FIG. 19, the rack 9 may have the receive electrodes 9c arranged on the lower portion of the side wall 9b so that the electric power is fed from the plurality of feed electrodes 12a arranged on both sides of the longitudinal transfer path 8b of the specimen-vessel transferring device 8 at a predetermined interval in the conveying direction of the rack 9.

The automatic analyzer and the dispensing method of the above-described embodiment are explained for the case where blood is dispensed as a specimen to analyze hemoglobin A1c that is a component of red blood cells. However, the automatic analyzer and the dispensing method of the present invention are not limited to a specimen such as blood if a specimen contains a sedimented component in which a concentration gradient occurs in a vertical direction due to the settling in accordance with the passage of time after the specimen is collected, and, for example, the automatic analyzer and the dispensing method of the present invention can be used for a specimen that contains body fluid such as spinal fluid, bile, sputum, or mucus, or a specimen such as river water, lake water, or ocean water, that contains a sedimented component such as suspended particulate organic matter. Moreover, the automatic analyzer and the dispensing method of the present invention can be used for control serum, or the like.

Meanwhile, the above-described embodiment is explained for the case of the stirring means that stirs the specimen by driving the vibrator arranged in the vessel that contains the specimen or the rack on which the vessel is arranged. However, if an arrangement space can be obtained, it is possible to use a stirring means that stirs the specimen by mechanically vibrating the vessel that contains the specimen or the rack on which the vessel is arranged.

### INDUSTRIAL APPLICABILITY

As described above, the automatic analyzer and the dispensing method of the present invention are useful for always dispensing a specimen that contains a sedimented component at a constant concentration simply by inserting the tip end of the dispensing probe into the specimen to a certain level in the same manner as for a usual liquid sample.

## Claims

1. An automatic analyzer that stirs a plurality of different liquids to induce a reaction and measures an optical characteristic of a reaction liquid, thereby analyzing the reaction liquid, the automatic analyzer comprising a stirring unit that includes
a vibrator that is arranged on a vessel that contains a specimen including a sedimented component or a rack on which the vessel is arranged; and
an electrode that is arranged on a transfer path for transferring the rack to a dispensing position and feeds electric power to the vibrator, wherein
the stirring unit feeds the electric power from the electrode to the vibrator while the rack is being transferred to the dispensing position along the transfer path and stirs the specimen including the sedimented component contained in the vessel.

2. The automatic analyzer according to claim 1, wherein the specimen is stirred during a time from when the rack is installed on the transfer path to when the specimen is dispensed at the dispensing position.

3. A dispensing method for dispensing a specimen that includes a sedimented component, the dispensing method comprising a stirring step for stirring the specimen that includes the sedimented component before dispensing.

4. The dispensing method according to claim 3, further comprising a dispensing step for dispensing a clear supernatant fluid of the specimen before the stirring step.
